# EUROPÄISCHE PATENTSCHRIFT

(11) **EP 0 402 517 B1**
(45) Veröffentlichungstag und Bekanntmachung des Hinweises auf die Patenterteilung: **02.03.1994**
(21) Anmeldenummer: 89111015.7
(22) Anmeldetag: 16.06.1989
(51) Int. Cl.: H02K 9/19

(54) **Antrieb eines langsam laufenden Rotors einer Arbeitsmaschine**
Drive for a slowly running rotor of a process machine
Entraînement d'un rotor à faible vitesse d'une machine à travailler

(43) Veröffentlichungstag der Anmeldung: 19.12.1990
(73) Patentinhaber: SIEMENS AKTIENGESELLSCHAFT, 80333 München (DE)
(72) Erfinder: Spirk, Franz Obering, D-1000 Berlin 13 (DE); Jordan, Martin, D-8520 Erlangen (DE)

(56) Entgegenhaltungen:
- DE-A- 2 064 821
- DE-A- 2 715 366
- DE-A- 3 247 888
- DE-C- 761 310
- DE-C- 3 635 297
- FR-A- 1 556 113
- US-A- 2 648 789
- US-A- 2 804 404

## Beschreibung

Die Erfindung betrifft einen Antrieb gemäß den Merkmalen des Oberbegriffs des Anspruchs 1.

Für den Antrieb langsam laufender Arbeitsmaschinen ist es bekannt, Synchron- oder Asynchron-Außenläufermotoren mit einem äußeren Rotormantel und innerer Statorwelle einzusetzen. Der Einsatz erfolgt überwiegend da, wo die Drehzahl der angetriebenen Maschine verhältnismäßig niedrig ist und ein großes Drehmoment verlangt wird. Vorteilhaft ist dabei die Einsparung eines Getriebes, eine vereinfachte Lagerung und, besonders im untertägigen Bergbau wichtig, eine erhebliche Platzersparnis.

Einen Außenläufer-Seilscheibenantrieb, der als Synchron- oder als Asynchronantrieb ausgebildet sein kann, zeigt die DE-AS 1 095 485. Da es sich hier um einen Antrieb mit häufigen Stillstandszeiten handelt, der thermisch nur gering belastet ist, ist keine Kühlung des Antriebs vorgesehen.

Einen weiterentwickelten, gekühlten Synchron-Außenläufermotor zum Antrieb des Schaufelrades eines Großraumbaggers im Tagebau zeigt die DE 32 47 888 A1, die eine Luftkühlung des Antriebs durch im Kreislauf strömende, über einen Wärmetauscher rückgekühlte, Luft vorsieht. Dieser bekannte Antrieb, der den Ausgangspunkt der vorliegenden Erfindung darstellt, löst das Problem der Kühlung langsam laufender Synchron-Außenläufermotoren bereits zufriedenstellend.

Aus der DE-C-36 15 297 ist ein gekapselter Außenläufermotor bekannt, bei dem der Rotormantel durch Lagerschilde abgeschlossen ist, die bis zur Statorwelle nach innen reichen und zusammen mit dem Rotormantel und der Statorwelle ein Gehäuse bilden, das mit einem flüssigen Kühlmedium gefüllt ist. Durch eine spezielle Anpassung der Form der Lagerschilde an die Form der Wicklungsköpfe der Statorwicklung und durch Anordnung der Form der Lagerschilde an die Form der Wicklungsköpfe der Statorwicklung und durch Anordnung von Leitschaufeln an der Innenseite eines der Lagerschilde entsteht im Motorinnenraum eine Kreiselpumpe zur Förderung des Kühlmediums. Zusätzlich kann auch eine externe Kühlmittelpumpe angeschlossen werden.

Aus der US-A-2 648 789 ist ein weiterer ölgekühlter gekapselter Außenläufermotor bekannt, wobei im Inneren des Rotors eine begrenzte Menge eines flüssigen Kühlmediums enthalten ist. Bei ausreichend hoher Drehzahl bildet das Kühlmedium einen an der Innenwand des Rotors anliegenden und mitrotierenden Flüssigkeitsring aus dem mit Hilfe von Leitelementen an dem Stator ein Teil des Kühlmediums abgeleitet und dem Stator zugeführt wird. Die Kühlung ist somit nur bei ausreichend hohen Drehzahlen wirksam.

Der Erfindung liegt die Aufgabe zugrunde, eine optimale Kühlung für langsam laufende Außenläufermotoren zu ermöglichen.

Gemäß der Erfindung wird die Aufgabe durch die Merkmale des Anspruchs 1 gelöst.

Überraschenderweise hat sich trotz der bisher bekannten zufriedenstellend arbeitenden Kühlung von langsamen Außenläufermotoren die direkte Kühlung durch ein flüssiges Kühlmedium als vorteilhaft herausgestellt, obwohl auf den ersten Blick Nachteile aufgrund des höheren Gewichtes und der Flüssigkeitsreibung zwischen Rotor und Stator zu überwiegen scheinen. Durch die Verwendung von Füllkörpern zeigte sich jedoch, daß die erforderliche Kühlmittelmenge im Gehäuse überraschend gering sein kann, so daß die Vorteile, wie die wesentlich bessere Wärmeleitung aus den Bereichen des Antriebs, in denen Wärme auftritt, der damit verringerte erforderliche Raumbedarf des Antriebs und die erhöhte Funktionssicherheit, da zeitliche Überhitzungen bei Überlastung ausgeschlossen werden, bei weitem überwiegen. Die Füllkörper können aus Stahlblech oder auch aus Kunststoffmaterial sowie einfach glattflächig ausgebildet sein. Die Füllkörper werden vorteilhaft bei der Montage des Gehäuses eingelegt und durch eine öldichte Verschraubung von außen oder sogar durch Verklebung mit dem Gehäuse verbunden.

In Ausgestaltung der Erfindung ist vorgesehen, daß die Ständerwicklung des Motors in mehrere, einer Anzahl von Teilfugen entsprechende Bereiche von geschlossenen Spulen unterteilt ist, die nur in den zwischen den Teilfugen befindlichen Nuten liegen, so wie dies aus der DE-C-761 310 bekannt ist. So wird die Montierbarkeit beim Aufbau oder bei dem Umsetzen der Arbeitsmaschine erheblich verbessert. Darüber hinaus ist in vorteilhafter Weise vorgesehen, daß bei den der Teilfuge benachbarten, nur mit einer Spulenseite belegten Nuten der Luftspalt vergrößert ist und daß die Vergrößerung des Luftspalts zur Teilfuge hin zunimmt. So können die magnetischen Kraftwirkungen verbessert werden.

Besonders vorteilhaft ist es, wenn die Rotor- und Statorwicklungen, die langgestreckt ausgebildet werden, um den Raumbedarf des Antriebes zu verringern, Kanäle für das flüssige Kühlmedium bilden oder aufweisen, das durch Leitorgane gezielt an die Rotorpole und die Statorwicklung herangeführt wird. Die Leitorgane können aus kostengünstig herstellbaren Kunststoffplatten hergestellt werden und sind einfach mit den Füllkörpern oder mit dem Gehäuse und seinen Einbauten verbindbar. Insgesamt ergibt sich durch die Kanalausbildung zwischen den Rotor- und Statorwicklungen sowie durch die Verwendung von Füllkörpern und Leitflächen eine gezielte, gut wirksame Kühlung, die für eine sichere Abführung der Verlustwärme aus dem Antrieb sorgt.

Die aufgrund der Anordnung der Füllkörper im Gehäuse nur geringe erforderliche Kühlmittelmenge ist insbesondere wichtig, wenn, wie vorgesehen, Mineral-oder Silikonöl als Wärmeträger verwendet wird. Mineral- und insbesondere Silikonöl ist relativ kostenaufwendig, so daß die umlaufende Kühlmittelmenge so klein wie möglich gehalten werden muß. Durch die Verwendung von Mineral- oder Silikonöl, das eine sehr hohe Flammtemperatur hat, ergibt sich aber der Vorteil, daß ein großer Temperaturbereich ausgenutzt werden kann. Die Rücklauftemperatur kann gegenüber der Verwendung von Wasser mehr als verdoppelt werden.

Insgesamt ergibt sich bei dem Vergleich der möglichen Kühlvarianten,
1. Frischluftkühlung,
2. Kühlung mit geschlossenem Luftkühlkreislauf,
3. Wasserkühlung des Stators, Luftkühlung des Rotors,
4. Sprühölkühlung,
5. Umlaufölkühlung mit Normalöl und
6. Umlaufölkühlung mit Mineral- oder Silikonöl, z.B. Midel ^{R} 7131 der Firma Isoliersysteme Dr. Beck, Hamburg,
bei der erfindungsgemäßen Ausgestaltung überraschend, daß die Lösung mit dem kostenaufwendigen Nicht-Normalöl die insgesamt günstigste ist.

Die Zahl der Rotorpole liegt erfindungsgemäß im Bereich zwischen 34 und 46, insbesondere im Bereich von 38 bis 42. Diese Zahl der Rotorpole ist unter Berücksichtigung der Wärmeentwicklung der Einzelpole insbesondere für Antriebe im Bergbau besonders günstig, um ein großes Drehmoment bei guter Kühlung und kleinen Außenabmessungen zu erreichen.

Der Synchronmotor muß für seinen Einsatz als Einheit mit seinem Stromrichter angesehen werden. Für diesen ist ein Siedebadkühler besonders vorteilhaft, da dieser höchste Kühlwirkung und kleinste Abmessungen miteinander vereinigt. Insgesamt ergibt sich für den Antrieb, bestehend aus den beiden Teilen Außenläufer-Synchronmotor und Stromrichter, durch diese Kombination eine bisher unerreicht günstige Gesamtausbildung, die auch unter härtesten Untertage-Einsatzbedingungen zuverlässig arbeitet und dabei den geringstmöglichen Platzbedarf aufweist.

Weitere Vorteile und Einzelheiten der Erfindung ergeben sich aus der nachfolgenden Beschreibung eines Ausführungsbeispiel anhand der Zeichnung und in Verbindung mit den Unteransprüchen.

Es zeigt:

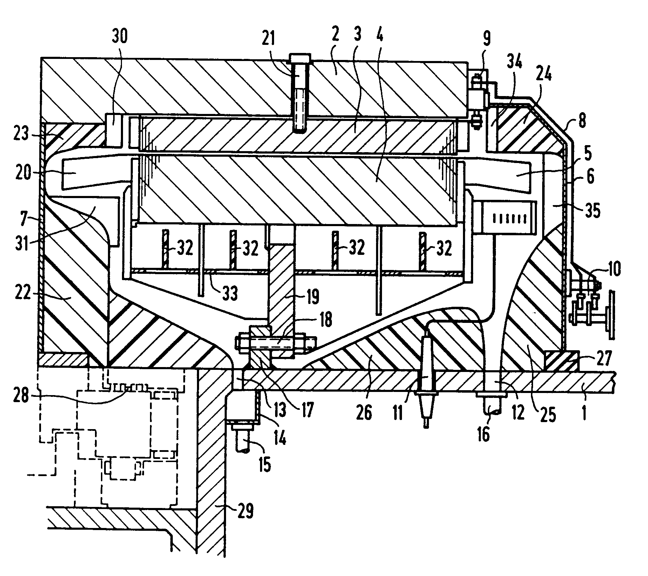

- FIG 1: ein erfindungsgemäß gekühltes Rotor-Statorsystem.

In der Zeichnung bezeichnet 1 die Statorwelle und 2 den Rotormantel. Innen am Rotormantel 2 befinden sich die Pole 3 des Rotors, z.B. 40. Die Pole 3 des Rotors sind über Schrauben 21 mit dem Rotormantel 2 verschraubt. Die Anzahl der Schrauben je Pol 3 beträgt vorzugsweise drei, wie dies durch die eingezeichneten Aufnahmeöffnungen für die Schraubenköpfe angedeutet ist. Die mittlere Schraube 21 weist jeweils eine Scherbuchse auf. Die Statorwicklung 4 ist durch Tragelemente 33 über das Mittelelement 19 vorteilhaft einfach mit Schrauben 18 und den Flansch 17 mit der Statorwelle 1 verbunden. Der Flansch 17 ist vorteilhaft einfach mit der Statorwelle 1 verschweißt. Insgesamt ergibt sich eine kostengünstige und leichte Befestigung der Statorwicklung 4, die auch einen ungehinderten Zutritt des flüssigen Kühlmediums zu der Statorwicklung 4 erlaubt.

Außen um den erfindungsgemäßen Antrieb herum erstreckt sich das Gehäuse mit den Seitenwänden 6 und 7, das zusammen mit der Statorwelle 1 und dem Rotormantel 2 einen abgeschlossenen Kühlraum bildet, in den das Kühlmedium durch die Öffnungen 12 und 13 in der Statorwelle 1 über die Zuleitungen 15 und 16 eingeführt wird. Die Zuleitung 15 für das zuströmende Kühlmedium mündet vorteilhaft in einen Verteilerkasten 14, aus dem es durch eine Vielzahl von Öffnungen 13 in den geschlossenen Kühlraum gelangt. Hierdurch wird eine gute Verteilung der Kühlflüssigkeit im Kühlraum erreicht, die eine gleichmäßige Kühlung der Statorwicklung 4 und der Rotorpole 3 erlaubt. Die gleichmäßige Verteilung wird noch durch Füllkörper 22, 23, 24, 25 und 26 in Verbindung mit Rippen 30, 31, 32, 34 und 35 verbessert, die z.B. am Blech, aber auch aus geschlossenporigem Hartkunststoffschaum bestehen können. Die Füllkörper und die Rippen sind gegebenenfalls in nicht gezeigter Weise mehrteilig ausgebildet, um montiert werden zu können.

Das Elektrokabel für den Antrieb wird über die Durchführung 11 durch die Statorwelle 1 geführt. Die Ausbildung der Pole 3 und der Statorwicklung 4 sowie die übrige elektrotechnische Ausgestaltung ist ebenso wie die seitlichen Wicklungsköpfe 5 und 20 der Statorwicklung 4 konventionell. Die gilt auch für die Stromzuführung des Rotors über die Durchführung 9 und die Bürstenanordnung 10, zwischen denen sich die Leitung 8 erstreckt. Die Leitung 8 und die Bürstenanordnung 10 befinden sich außerhalb des Gehäuses für das flüssige Kühlmedium, um die Überwachung und Wartung zu erleichtern.

Die Statorwicklung 4 ist in mehrere, einer Anzahl von Teilfugen entsprechende Bereiche von geschlossenen Spulen unterteilt, die nur in zwischen Teilfugen befindlichen Nuten liegen. Bei den der Teilfuge benachbarten, nur mit einer Spulenseite belegten Nuten ist der Luftspalt vergrößert und die Vergrößerung des Luftspalts nimmt vorteilhaft zur Teilfuge hin zu.

Die Statorwelle 1 ist arbeitsseitig durch einen Deckel 29 verschlossen, an den sich eine Lagerung für den Arbeitskopf des Antriebs anschließt. Der Arbeitskopf und seine Lagerung ist ebenso wie die Dichtungen 27 und 28 des Gehäuses nicht Gegenstand der Erfindung. Das gleiche gilt für die um den Antrieb herum angeordneten und nicht gezeichneten Teile der Arbeitsmaschine, die den jeweiligen, unterschiedlichen Aufgaben angepaßt wird.

Die elektrischen Teile des Motors sind vorteilhaft durch eine unter Vakuum durchgeführte Kunstharz-Ganztränkung versiegelt. So kann bei einer Demontage das an den Motorteilen anhaftende Kühlmedium abgespritzt werden. Bei der Verwendung des biologisch leicht abbaubaren "Midel"^{R} Mineralöls ist dieses Vorgehen bezüglich der Umweltbelastung unbedenklich.

Der zusammen mit dem Antrieb als elektrische Einheit zu betrachtende Stromrichter ist als Siedebad-Kühlaggregat ausgebildet. Sein genauer Aufbau ist aus "Glasers Annalen", 113. Jahrgang, Heft 2 1989, Seite 50 bis 57 zu ersehen (Siemens Sonderdruck). Entsprechend ausgerüstete Stromrichter sind schon aus der Lokomotivtechnik bekannt. Ihre spezifischen Eigenschaften machen sie jedoch auch vorteilhaft für Antriebe an Arbeitsmaschinen unter Tage ohne Änderungen einsetzbar.

Insgesamt ergibt sich durch die Erfindung eine neue, insbesondere im untertägigen Bergbau besonders günstig einsetzbare Antriebseinheit, die besonders betriebssicher bei kompaktester Ausführung arbeitet. Die Rückkühlung kann vorteilhaft durch Kühlwasser oder u.U. durch die normale Bewetterung erfolgen, so daß ein universeller Einsatz unter Tage möglich ist.

Die Siedebad-Kühlung des Stromrichters ist für diesen besonders geeignet und bereits eingehend erprobt. Es versteht sich für den Fachmann, daß diese jedoch auch in geeigneten Bereichen des Außenläufermotors eingesetzt werden kann. So kann sich eine weitere Verringerung der benötigten Kühlmittelmenge und eine Verkleinerung des Antriebs ergeben, ohne daß die Kühlleistung herabgesetzt wird. Dies gilt sowohl für die Verwendung der erfindungsgemäßen Kühlung in der beschriebenen Form als Synchronmotor als auch in der nicht beschriebenen Form des Asynchronmotors.

## Patentansprüche

1. Antrieb eines langsam laufenden, ringförmigen Rotors einer Arbeitsmaschine, insbesondere im Bergbau, z.B. eines Baggerschaufelrades, einer Tunnelbohrmaschine, eines Fräskopfes etc., mit einem elektrischen Außenläufermotor mit äußerem Rotormantel (2) und innerer Statorwelle (1) mit Wicklung (4), wobei der Rotormantel (2) durch Seitenwände (6, 7) abgeschlossen ist, die bis zur Statorwelle (1) oder deren Lager nach innen reichen und zusammen mit dem Rotormantel (2) und der Statorwelle (1) ein Gehäuse bilden, das mit einem, in einem geschlossenen Kühlkreis geführten und die wesentlichen, Verlustwärme erzeugenden, Teile des Motors umströmenden Kühlmedium gefüllt ist, dadurch gekennzeichnet, daß ein flüssiges Kühlmedium verwendet wird und daß in dem Gehäuse die erforderliche Menge des Kühlmediums verringernde Füllkörper (22,23,24,25,26) angeordnet sind.

2. Antrieb nach Anspruch 1, **dadurch gekennzeichnet,** daß die Statorwicklung (4) in mehrere, einer Anzahl von Teilfugen entsprechende Bereiche von geschlossenen Spulen unterteilt ist, die nur in den zwischen den Teilfugen befindlichen Nuten liegen.

3. Antrieb nach Anspruch 2, **dadurch gekennzeichnet,** daß bei den der Teilfuge benachbarten, nur mit einer Spulenseite belegten Nuten der Luftspalt vergrößert ist und die Vergrößerung des Luftspalts zur Teilfuge hin zunimmt.

4. Antrieb nach Anspruch 1,2, oder 3, **dadurch gekennzeichnet,** daß die Rotorpole (3) und Statorwicklung (4) Kanäle für das flüssige Kühlmedium bilden oder aufweisen.

5. Antrieb nach Anspruch 1, 2, 3 oder 4, **dadurch gekennzeichnet,** daß in dem Kühlmittelgehäuse (1, 2, 6, 7) Leitorgane (30, 31, 32, 34, 35) für das Kühlmittel angeordnet sind.

6. Antrieb nach Anspruch 1, 2, 3, 4 oder 5, **dadurch gekennzeichnet,** daß die Zahl der Rotorpole 34 bis 46, insbesondere 38 bis 42, beträgt.

7. Antrieb nach Anspruch 1, 2, 3, 4, 5 oder 6, **dadurch gekennzeichnet,** daß die Statorwelle (1) Öffnungen (12, 13) für die Zu- und Ableitung des Kühlmediums aufweist, deren Anzahl zulaufseitig größer als ablaufseitig ist.

8. Antrieb nach einem der vorhergehenden Ansprüche, **dadurch gekennzeichnet,** daß als Kühlmedium Mineral- oder Silikonöl verwendet wird.

9. Antrieb nach einem der vorhergehenden Ansprüche, **dadurch gekennzeichnet,** daß er einer Vakuum-Ganztränkung mit Kunststoff, vorzugsweise Epoxydharz, unterzogen ist.

10. Antrieb nach einem der vorhergehenden Ansprüche, **dadurch gekennzeichnet,** daß bei ihm eine Flüssigkeits-Umspülungskühlung für die Rotor- und Statorwicklungen mit Zu- und Ablaufieitungen (15, 16) durch Öffnungen (12, 13) der Statorwelle (1) verwendet wird.

11. Antrieb nach einem der vorhergehenden Ansprüche, **dadurch gekennzeichnet,** daß zur Speisung des Synchronmotors ein in der Nähe angeordneter, mit ihm eine elektrische Einheit bildender, Stromrichter mit einem Siedebad-Kühler verwendet wird.

## Claims

1. Drive of a slowly running annular rotor for a working machine, in particular in the mining industry, for example of a dredging bucket wheel, of a boring machine for tunnels, of a milling head etc., with an electrical external rotor motor with external rotor casing (2) and inner stator shaft (1) with winding (4), wherein the rotor casing (2) is sealed by side walls (6, 7) which reach as far as the stator shaft (1) or its bearing to the inside and form together with the rotor casing (2) and the stator shaft (1) a housing, which is filled with a cooling medium carried in a closed cooling circuit and flowing around the essential parts of the motor which generate heat loss, characterized in that a liquid cooling medium is used and in that filler bodies (22, 23, 24, 25, 26) reducing the necessary quantity of the cooling medium are arranged in the housing.

2. Drive according to claim 1, characterized in that the stator winding (4) is divided into several regions of closed coils corresponding to a number of joints, which only lie in the grooves located between the joints.

3. Drive according to claim 2, characterized in that with the grooves adjacent to the joint and only covered with one side of a coil the air gap is enlarged and the enlargement of the air gap increases towards the joint.

4. Drive according to claim 1, 2 or 3, characterized in that the rotor poles (3) and stator winding (4) form or have ducts for the liquid cooling medium.

5. Drive according to claim 1, 2, 3 or 4, characterized in that conducting parts (30, 31, 32, 34, 35) for the coolant are arranged in the coolant housing (1, 2, 6, 7).

6. Drive according to claim 1, 2, 3, 4 or 5, characterized in that the number of rotor poles amounts to 34 to 46, in particular 38 to 42.

7. Drive according to claim 1, 2, 3, 4, 5 or 6, characterized in that the stator shaft (1) has openings (12, 13) for the supply and removal of the cooling medium, the number of which is larger on the inlet side than on the outlet side.

8. Drive according to one of the preceding claims, characterized in that mineral oil or silicon oil is used as cooling medium.

9. Drive according to one of the preceding claims, characterized in that it is subjected to total vacuum impregnation with plastic, preferably epoxide resin.

10. Drive according to one of the preceding claims, characterized in that with it circulating liquid cooling is used for the rotor windings and stator windings with inlet and outlet lines (15, 16) through openings (12, 13) of the stator shaft (1).

11. Drive according to one of the preceding claims, characterized in that to feed the synchronous motor a converter, with a boiling-bath cooler, arranged in the vicinity and forming an electrical unit with it is used.

## Revendications

1. Dispositif d'entraînement d'un rotor annulaire à rotation lente d'une machine de travail, notamment dans l'exploitation d'une mine, par exemple d'un excavateur à godets, d'un tunnelier, d'une tête de fraisage, etc., comportant un moteur électrique à induit extérieur, possédant une enveloppe rotorique extérieure (2) et un arbre statorique intérieur (1) équipé d'un enroulement (4), et dans lequel l'enveloppe rotorique (2) est fermée par des parois latérales (6, 7), qui s'étendent vers l'intérieur jusqu'à l'arbre statorique (1) ou jusqu'à ses paliers et forment, conjointement avec l'enveloppe rotorique (2) et l'arbre statorique (1), un carter qui est rempli par un fluide de refroidissement, qui est guidé dans un circuit de refroidissement fermé et circule autour des parties importantes du moteur, qui dégagent de la chaleur, caractérisé par le fait qu'on utilise un fluide de refroidissement liquide et que des corps de remplissage (22, 23, 24, 25, 26), qui réduisent la quantité nécessaire du fluide de refroidissement, sont disposés dans le carter.

2. Dispositif d'entraînement suivant la revendication 1, caractérisé par le fait que l'enroulement statorique (4) est réparti entre plusieurs parties, qui correspondent à un certain nombre de joints de séparation, de bobines fermées qui sont situées uniquement dans les encoches présentes entre les joints de séparation.

3. Dispositif d'entraînement suivant la revendication 2, caractérisé par le fait que dans le cas des rainures qui sont voisines du joint de séparation et sont occupées uniquement par un côté des bobines, l'entrefer est accru et l'accroissement de l'entrefer augmente en direction du joint de séparation.

4. Dispositif d'entraînement suivant la revendication 1, 2 ou 3, caractérisé par le fait que les pôles (3) du rotor et l'enroulement statorique (1) forment ou possèdent des canaux pour le fluide de refroidissement liquide.

5. Dispositif d'entraînement suivant la revendication 1, 2, 3 ou 4, caractérisé par le fait que des organes de guidage (30, 31, 32, 34, 35) pour le fluide de refroidissement sont disposés dans le carter (1, 2, 6, 7) logeant le fluide de refroidissement.

6. Dispositif d'entraînement suivant la revendication 1, 2, 3, 4 ou 5, caractérisé par le fait que le nombre des pôles du rotor est compris entre 34 et 46 et notamment entre 38 et 42.

7. Dispositif d'entraînement suivant la revendication 1, 2, 3, 4, 5 ou 6, caractérisé par le fait que l'arbre statorique (1) comporte des ouvertures (12, 13) pour la canalisation d'amenée et la canalisation d'évacuation du fluide de refroidissement et dont le nombre est plus important côté arrivée que côté départ.

8. Dispositif d'entraînement suivant l'une des revendications précédentes, caractérisé par le fait qu'on utilise de l'huile minérale ou de l'huile silicone en tant que fluide de refroidissement.

9. Dispositif d'entraînement suivant l'une des revendications précédentes, caractérisé par le fait qu'il est soumis à une imprégnation complète sous vide avec une matière plastique, de préférence une résine époxy.

10. Dispositif d'entraînement suivant l'une des revendications précédentes, caractérisé par le fait que dans ce dispositif, on utilise un refroidissement par enveloppement par le liquide pour les enroulements rotoriques et les enroulements statoriques avec des canalisations d'arrivée et d'évacuation (15, 16) passant par des ouvertures (12, 13) ménagées dans l'arbre formant stator (1).

11. Dispositif d'entraînement suivant l'une des revendications précédentes, caractérisé par le fait que pour l'alimentation du moteur synchrone, on utilise un convertisseur statique, qui est disposé à proximité du moteur et forme avec lui une unité électrique et qui comporte un refroidisseur à bain à ébullition.
